# EUROPEAN PATENT APPLICATION

(11) **EP 3 032 672 A1**
(43) Date of publication of application: **15.06.2016**
(21) Application number: 15199498.5
(22) Date of filing: 11.12.2015
(51) Int. Cl.: H02G 15/064

(54) **POWER CABLE POLYMER JOINT**

(30) Priority: 12.12.2014 JP 2014251557
(71) Applicant: Hitachi Metals, Ltd., Tokyo 1088224 (JP)
(72) Inventor: MURATA, Wataru, Minato-ku, Tokyo (JP); AISHIMA, Yukinori, Minato-ku, Tokyo (JP)
(74) Representative: Betten & Resch

(57) **Abstract**

A power cable polymer joint includes a polymeric insulator tube including a cable insertion hole into which a stripped end portion of a power cable is inserted. The polymeric insulator tube includes an insulation protective layer including a polymer-based material as a main component, a smaller inner diameter than an outer diameter of the end portion before the insertion, and a first cable insertion hole tightly contacting the end portion upon the insertion, and an embedded pipe being embedded on an inner peripheral surface of the insulation protective layer near a tip of the power cable in relation to the first cable insertion hole so as to face the end portion, and including a metal and a second cable insertion hole having an larger inner diameter than the outer diameter of the end portion.

## Description

The present application is based on Japanese patent application No.2014-251557 filed on December 12, 2014, the entire contents of which are incorporated herein by reference.

### BACKGROUND OF THE INVENTION

### 1. FIELD OF THE INVENTION

The present invention relates to a power cable polymer joint using a polymeric insulator tube.

### 2. DESCRIPTION OF THE RELATED ART

In porcelain insulator-type freestanding dry terminal joints, porcelain insulator is relatively heavy. Therefore, a freestanding dry terminal joint lighter than when using porcelain insulator has been proposed (see e.g., JP-B-5060800).

The freestanding dry terminal joint is provided with a flexible rubber insulation layer having cable insertion holes for insertion of an end side of a cable, and a freestanding resin tube which is integrally provided in the insulation layer in the middle of the thickness of the insulation layer so as to extend in an axial direction and has electrical insulating properties and rigidity.

### SUMMARY OF THE INVENTION

The freestanding dry terminal joint is constructed by using the light rubber insulation layer and the resin tube as a core so as to reduce the weight of the terminal joint. In addition, it has free-standing properties required to keep a vertical upright position by using the resin tube as a core. Thus, it is easy to install on utility poles.

However, since the freestanding resin tube as the core is formed of the resin, the joint when used horizontally may not keep the horizontal position by itself and the tip portion thereof may hang down. Thus, the resin tube is not good enough as the core.

It is an object of the invention to provide a power cable polymer joint that is lightened as compared to using the porcelain insulator and has the free-standing properties required to keep the horizontal position even when used horizontally.

According to an embodiment of the invention, a power cable polymer joint comprises a polymeric insulator tube comprising a cable insertion hole into which a stripped end portion of a power cable is inserted,
wherein the polymeric insulator tube comprises:
an insulation protective layer comprising a polymer-based material as a main component, a smaller inner diameter than an outer diameter of the end portion before the insertion, and a first cable insertion hole tightly contacting the end portion upon the insertion; and
an embedded pipe being embedded on an inner peripheral surface of the insulation protective layer near a tip of the power cable in relation to the first cable insertion hole so as to face the end portion, and comprising a metal and a second cable insertion hole having an larger inner diameter than the outer diameter of the end portion.

### Effects of the invention

According to an embodiment of the invention, a power cable polymer joint can be provided that is lightened as compared to using the porcelain insulator and has the free-standing properties required to keep the horizontal position even when used horizontally.

### BRIEF DESCRIPTION OF THE DRAWINGS

Next, the present invention will be explained in more detail in conjunction with appended drawings, wherein:
**FIG.1** is a longitudinal cross-sectional view showing a configuration example of a power cable polymer joint in a first embodiment of the present invention;
**FIG.2** is a lateral cross-sectional view showing a power cable shown in **FIG.1****;** and
**FIG.3** is a front view showing a main portion of a configuration example of vehicle-to-vehicle connection in a second embodiment of the invention.

### DETAILED DESCRIPTION OF THE PREFERRED EMBODIMENTS

Embodiments of the invention will be described below in reference to the drawings. Constituent elements having substantially the same functions are denoted by the same reference numerals in each drawing and the overlapping explanation thereof will be omitted.

### First embodiment

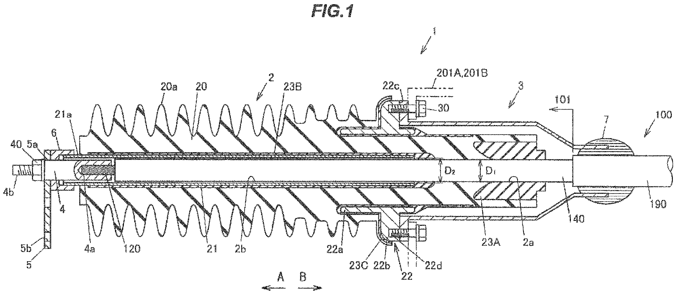

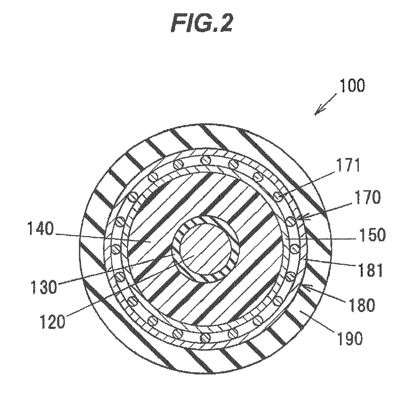

**FIG.1** is a longitudinal cross-sectional view showing a configuration example of a power cable polymer joint in the first embodiment of the invention. **FIG2** is a lateral cross-sectional view showing a power cable shown in **FIG.1****.**

A power cable polymer joint 1 is formed mainly of a polymer-based material (an insulating polymer material), and is provided with a polymeric insulator tube **2** having cable insertion holes **2a** and **2b** for insertion of a stripped end portion **101** of a power cable **100,** a protective metal fitting **3** for protecting a rear-end side B (opposite to an insertion direction A) of the polymeric insulator tube **2,** a conductor-connecting rod **4** connected to a conductor **120** of the power cable **100,** a fixing terminal **5** to which the conductor-connecting rod 4 is attached, a high-voltage shield **6** connected to the conductor-connecting rod 4 via the fixing terminal **5,** and a waterproofing portion **7** for sealing between the protective metal fitting **3** and the power cable **100.**

### Configuration of polymeric insulator tube

The polymeric insulator tube 2 is provided with a flexible insulation **20** formed of a polymer-based material, an embedded pipe **21** as a reinforcing member or a core formed of a metal and embedded on an inner peripheral surface of the insulation **20** so as to face an insulation layer **140** of the end portion **101** of the power cable **100,** an embedded flange **22** as a reinforcing member or a core formed of a metal and embedded in the insulation **20** on the outer peripheral side, a first semi-conductive portion **23A** for relaxing an electric field at the end portion **101** of the power cable **100,** a second semi-conductive portion **23B** for relaxing an electric field in the embedded pipe **21,** and a third semi-conductive portion **23C** for relaxing an electric field in the embedded flange **22.** The insulation **20,** the embedded pipe **21,** the embedded flange **22** and the first to third semi-conductive portions **23A** to **23C,** which constitute the polymeric insulator tube **2,** are integrally formed using a mold in a factory. The insulation **20** and the first to third semi-conductive portions **23A to 23C** here are an example of insulation protective layer.

Plural umbrella portions **20a** are formed on the outer periphery of the insulation **20** at certain intervals. The polymer-based material for forming the insulation **20** is, e,g., a silicone rubber, an ethylene-propylene rubber (EPM) or an ethylene-propylene-diene rubber (EPDM), etc.

The first cable insertion hole **2a** of the insulation protective layer located on the side B opposite to the insertion direction A has a smaller inner diameter than an outer diameter D₁ of the end portion **101** of the power cable **100,** i.e., of the insulation layer **140,** before insertion of the end portion **101** of the power cable **100,** and is tightly in contact with the insulation layer **140** once the insulation layer **140** of the power cable **100** is inserted.

The embedded pipe **21** is formed of, e.g., a metal such as brass or aluminum alloy. The embedded pipe **21** has, e.g., an outer diameter of **30** to **50** mm and a thickness of **2** to **5** mm. To facilitate insertion of the power cable **100,** the embedded pipe **21** has the second cable insertion hole **2**b having an inner diameter D₂ which is larger than the outer diameter of the insulation layer **140.** Since the outer peripheral surface of the embedded pipe **21** is covered with the second semi-conductive portion **23**B, it is possible to use a commercially available product as the embedded pipe **21.** Alternatively, the second semi-conductive portion **23**B can be omitted when the embedded pipe **21** is formed to have a smooth outer peripheral surface (e.g., with an arithmetic mean roughness Ra of not more than **6.3** µm).

The embedded pipe **21** also has a portion **21**a where an end portion thereof in the insertion direction A is exposed from the insulation **20** in an axial direction of the cable. This exposed portion **21**a is connected to the high-voltage shield **6** as a connection member, and the high-voltage shield **6** is connected to the conductor **120** of the power cable **100** via the fixing terminal **5** and the conductor-connecting rod **4.** As a result, the embedded pipe **21** exerts a shielding effect. That is, in case of a structure in which the embedded pipe **21** is not provided on the inner peripheral surface of the insulation **20,** a space between the inner peripheral surface and the insulation layer **140** of the power cable **100** needs to be filled with an insulating compound to prevent insulation breakdown. On the other hand, in the present embodiment, since the embedded pipe **21** is embedded on the inner peripheral surface of the insulation **20** and is connected to the conductor **120** of the power cable **100,** a space between the embedded pipe **21** and the insulation layer **140** is a close space and there is no need to fill a compound between the embedded pipe **21** and the insulation layer **140.**

The embedded flange **22** is provided with a cylinder portion **22**a having a cylindrical shape and a flange portion **22**b provided on the outer peripheral surface of the cylinder portion **22**a all around the circumference. The embedded flange **22** is embedded in the insulation **20** on the outer peripheral side so that a mounting surface **22c** to be attached to another member is exposed from the insulation **20.** Female screws **22d** are formed on the mounting surface **22c** so that the embedded flange **22** can be attached to a case, etc., by bolts **30.** The embedded flange **22** having such a configuration is formed of, e.g., a metal such as brass or aluminum alloy and is connected to a ground when in use.

The first to third semi-conductive portions **23A to 23C** are formed mainly of a polymer-based material. In detail, the first to third semi-conductive portions **23A** to **23C** are formed by extruding a polymer-based material which is obtained by, e.g., dispersing conductive powder such as carbon in a silicone rubber, EMP or EPDM, etc., and thus has conductivity.

The first semi-conductive portion **23A,** before insertion of the end portion **101** of the power cable **100,** has a smaller inner diameter than the outer diameter **D₁** of the insulation layer **140.** The second semi-conductive portion **23**B covers the outer peripheral surface of the embedded pipe **21** except the end portion thereof in the insertion direction A side. The third semi-conductive portion **23C** covers a surface of the embedded flange **22** which is not exposed from the insulation **20.**

### Other configuration

The protective metal fitting **3** is formed of, e.g., a metal such as brass or aluminum alloy and is configured to allow the power cable polymer joint **1** to be attached to a case **201**A or **201**B (described later) by the bolts **30.**

The conductor-connecting rod **4** has a connection hole **4**a formed on the rear-end side and a male screw **4**b formed on the front-end side. After inserting the conductor **120** of the power cable **100** into the connection hole **4**a of the conductor-connecting rod **4,** the diameter of the connection hole **4a** is reduced by crimping the rear-end side of the conductor-connecting rod **4** and the conductor-connecting rod **4** is thereby connected to the conductor **120** of the power cable **100.**

The fixing terminal **5** has an insertion hole **5a** for inserting the conductor-connecting rod **4** and a connection hole **5**b to which an electric wire is connected. The conductor-connecting rod **4** is inserted into the insertion hole **5a,** the male screw **4**b is tightened with a nut **40,** and the fixing terminal **5** is thereby attached to the conductor-connecting rod **4.**

The high-voltage shield **6** is formed of a metal and has a cylindrical shape surrounding the conductor-connecting rod **4.** The high-voltage shield **6** connects the embedded pipe **21** to the fixing terminal **5** and the conductor-connecting rod **4** is thereby shielded.

The waterproofing portion **7** is formed by winding a highly waterproof member, e.g., a polyethylene tape or epoxy tape, etc., having an adhesive layer.

### Configuration of power cable

The power cable **100** is composed of the conductor **120** formed of a twisted wire, an inner semi-conductive layer **130** formed around the conductor **120,** the insulation layer **140** formed around the inner semi-conductive layer **130,** an outer semi-conductive layer **150** formed around the insulation layer **140,** a shield layer **170** formed by winding wires **171** around the outer semi-conductive layer **150,** a binding tape layer **180** formed by winding a binding tape **181** around the shield layer **170,** and a sheath layer **190** formed around the binding tape layer **180.**

The conductor **120** is formed by twisting plural strands together. As the strand, it is possible to use a wire rod, e.g., a tin-plated soft copper wire, etc. The conductor **120** transmits electricity with a high voltage of, e.g., not less than 7000V

The inner semi-conductive layer **130** and the outer semi-conductive layer **150** are provided to relax electric field concentration, are formed mainly of a polymer-based material, and are formed by extruding a material which is obtained by, e.g., dispersing conductive powder such as carbon in a rubber such as ethylene-propylene rubber, ethylene-vinyl acetate copolymer (EVA) resin or butyl rubber and thus has conductivity.

The insulation layer **140** is formed by extruding a material such as ethylene-propylene rubber, vinyl chloride, cross-linked polyethylene, silicone rubber or fluorine-based material, etc.

The shield layer **170** is formed by spirally winding the wires **171** around the outer semi-conductive layer **150** along the axial direction of the cable. The shield layer **170** is connected to a ground when in use.

The binding tape layer **180** is formed by spirally winding the binding tape **181,** with an overlap, around the shield layer **170** along the axial direction of the cable. The binding tape **181** used can be, e.g., a plastic or rayon tape having a thickness of **0.03** to **0.5** mm and a width of **50** to **90** mm

The sheath layer **190** is formed by extruding a material formed by adding a cross-linking agent, etc., to a rubber such as natural rubber, butyl rubber, halogenated butyl rubber, ethylene-propylene rubber, chloroprene rubber, styrene-butadiene rubber, nitrile rubber, chlorosulfonated polyethylene, chlorinated polyethylene, epichlorohydrin rubber, acrylic rubber, silicone rubber, fluoro-rubber, urethane rubber or halogen-free polyolefin elastomer.

### Functions and effects of the first embodiment

In the first embodiment, the following functions and effects are obtained.
**(1)** Since a polymer-based material, which is lighter than porcelain, is used as the insulation and also the thin embedded pipe **21** is used as a reinforcing member, the power cable polymer joint **1** of the invention is lighter than when using a porcelain insulator.
**(2)** The embedded pipe **21** formed of a metal is embedded on the inner peripheral surface of the insulation **20.** Therefore, even when used horizontally, the power cable polymer joint **1** of the invention exerts free-standing properties and can maintain the horizontal position.
**(3)** In addition to the embedded pipe **21,** the embedded flange **22** formed of a metal is also embedded in the insulation **20** on the outer peripheral side. Therefore, even when used horizontally, the power cable polymer joint **1** of the invention exerts free-standing properties and can maintain the horizontal position.
**(4)** The outer peripheral surface of the embedded pipe **21** is covered with the second semi-conductive portion **23**B**.** Therefore, even if the embedded pipe **21** has a flaw on the outer peripheral surface, electric field concentration due to the flaw can be relaxed.
**(5)** The surface of the embedded flange **22,** except a portion exposed from the insulation **20,** is covered with the third semi-conductive portion **23C.** Therefore, even if the embedded flange **22** has a flaw on the surface, electric field concentration due to the flaw can be relaxed.
**(6)** Since the embedded pipe **21** is connected to the conductor **120** of the power cable **100,** a space between the embedded pipe **21** and the insulation layer **140** is a close space and there is no need to fill a compound between the embedded pipe **21** and the insulation layer **140.**
(7) A portion of the first semi-conductive portion **23**A is tightly in contact with the insulation layer **140** of the power cable **100** at the first cable insertion hole **2**a and good electrical characteristics are thereby maintained. Meanwhile, the embedded pipe **21** is electrically connected to the conductor **120** at an end portion of the power cable **100** and thus can exert a shielding effect.
**(8)** Since the inner diameter of the embedded pipe **21** is larger than the outer diameter of the end portion **101** of the power cable **100,** insertability of the power cable **100** into the cable insertion holes **2a** and **2b** is good.

### Second embodiment

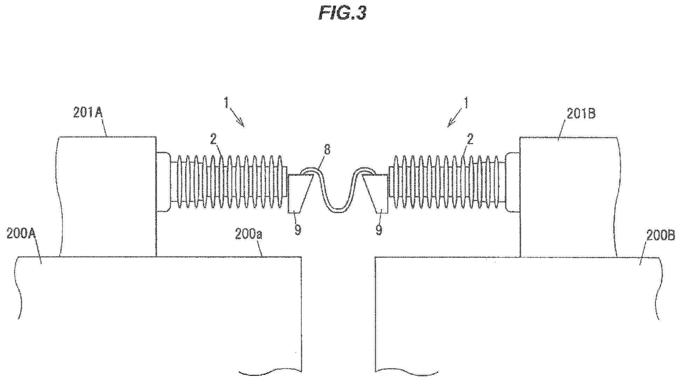

**FIG.3** is a front view showing a main portion of an example of vehicle-to-vehicle connection in the second embodiment of the invention. This vehicle-to-vehicle connection, to which the power cable polymer joint in the first embodiment is applied, includes a power cable polymer joint 1A attached to the case **201** A provided on a roof of a railway vehicle **200A** on one side, a power cable polymer joint **1B** attached to the case **201B** provided on a roof of a railway vehicle **200**B on the other side, a flexible electric wire **8** for connecting the two power cable polymer joints **1**A and **1B,** and insulation covers **9** covering the conductor-connecting portions **4,** the fixing terminals **5** and the high-voltage shields **6** of the power cable polymer joints **1A** and **1B.**

To attach the power cable polymer joints **1A and 1B** to the cases **201A** and **201B,** the bolts **30** are screwed into the female screws **22**d of the embedded flange **22** and tightened with the protective metal fitting **3** in-between, as shown in **FIG.1****.**

The power cable polymer joints **1A** and **1B** are connected to each other by attaching a conductor of the electric wire **8** to the respective fixing terminals **5.**

### Functions and effects of the second embodiment

In the second embodiment, the following functions and effects are obtained.
**(1)** In the power cable polymer joints **1A** and **1B,** the embedded pipe **21** formed of a metal is embedded on the inner peripheral surface of the insulation **20** and also the embedded flange **22** formed of a metal is embedded in the insulation **20** on the outer peripheral side. Therefore, the power cable polymer joints **1A** and **1B** hardly hang down on the tip side even when positioned horizontally and this allows the power cable polymer joints **1A** and **1B** to be used in a horizontal position.
**(2)** The power cable polymer joints **1A** and **1B** are connected to each other by the flexible electric wire **8.** Therefore, even when the railway vehicles **200A** and **200B** turn a curve, it is possible to follow the curve.

The present invention is not intended to be limited to the above-mentioned embodiments, and the various kinds of embodiments can be implemented. For example, although the cable terminal joint has been described in each embodiment, the invention is also applicable to a cable intermediate joint.

In addition, although horizontal use has been described in the second embodiment, the invention is also applicable to vertical use.

In addition, some of the constituent elements in the above-mentioned embodiments can be omitted or changed without changing the gist of the invention. For example, in the above-mentioned embodiments, the second semi-conductive portion **23B** may be omitted when forming the embedded pipe **21** to have a smooth or mirror outer peripheral surface. Also, in the above-mentioned embodiments, the third semi-conductive portion **23C** may be omitted when forming the embedded flange **22** to have a smooth or mirror surface.

## Claims

1. A power cable polymer joint, comprising a polymeric insulator tube comprising a cable insertion hole into which a stripped end portion of a power cable is inserted,
wherein the polymeric insulator tube comprises:
an insulation protective layer comprising a polymer-based material as a main component, a smaller inner diameter than an outer diameter of the end portion before the insertion, and a first cable insertion hole tightly contacting the end portion upon the insertion; and
an embedded pipe being embedded on an inner peripheral surface of the insulation protective layer near a tip of the power cable in relation to the first cable insertion hole so as to face the end portion, and comprising a metal and a second cable insertion hole having an larger inner diameter than the outer diameter of the end portion.
